# EUROPEAN PATENT APPLICATION

(11) **EP 4 830 528 A1**
(43) Date of publication of application: **28.10.2026**
(21) Application number: 25779482.6
(22) Date of filing: 10.03.2025
(51) Int. Cl.: A23J 3/00, A23J 3/14, A23J 3/16, A23J 3/18, A23L 17/00

(54) **DRIED FISH SUBSTITUTE**

(30) Priority: 29.03.2024 JP 2024056785
(71) Applicant: Fuji Oil Company, Limited, Izumisano-shi Osaka 598-8540 (JP)
(72) Inventor: SAMEJIMA Rikki, Makurazaki-shi, Kagoshima 898-0043 (JP); NISHIHASHI Masaya, Makurazaki-shi, Kagoshima 898-0043 (JP); YOKOTA Shimpei, Izumisano-shi, Osaka 598-8540 (JP)
(74) Representative: Boult Wade Tennant LLP
(86) International application number: PCT/JP2025/008656
(87) International publication number: WO 2025/204783

(57) **Abstract**

An object of the present invention is to provide a dried fish substitute containing plant protein as a main raw material. Another object of the present invention is to provide a dried fish substitute having an appearance characteristic of dried fish when shaved into flakes. Still another object of the present invention is to provide a dried fish substitute having a texture characteristic of dried fish when shaved into flakes. A method for producing a plant protein-containing dried fish substitute includes:
preparing a water-containing molded product, the water-containing molded product containing 10 mass% or more of plant protein based on 100 mass% of the water-containing molded product, having a moisture content of from 40 to 80% by mass, and having a dense structure; and
drying the water-containing molded product to obtain a dried solid product.

## Description

### Technical Field

### Related Application

The present application claims the benefit of priority from the Japanese Patent Application No. 2024-056785 filed with the Japan Patent Office on March 29, 2024. The priority application is incorporated herein by reference in its entirety.

The present invention relates to a dried fish substitute containing plant protein as a raw material, and to a method for producing the same.

### Background Art

In view of changes in the external environment, such as shortages off animal resources and animal welfare considerations, demand for substitutes for animal-based foods has been increasing. In particular, with regard to fish, not only environmental changes but also the depletion of natural resources due to overfishing and other factors, as well as ecosystem changes and environmental pollution in aquaculture, have regarded as serious issues. For these reasons, fish are considered to be one of the categories with particularly high demand for substitutes.

Against the above-described background, fish meat substitutes have been studied, and products such as tuna substitutes using granular soybean protein and fillet substitutes using mannan have been commercialized. However, no substitute for dried fish that requires a special processing step has yet been brought to market, and knowledge regarding such products remains limited.

Patent Document 1 discloses a shaved flake-like topping as a dried fish substitute produced from a plant-based raw material. Patent Document 1 describes obtaining a shaved dried fish flake-like food by heating and gelatinizing a mixture of cereal flours and/or starches, seasoning materials, and water, and then drying and shaving the gelatinized product.

### Citation List

### Patent Document

Patent Document 1: JP 2019-022474 A

### Summary of Invention

### Technical Problem

The technology disclosed in Patent Document 1 uses starch as the primary raw material. Compared with known products made from fish such as katsuobushi (dried bonito flakes), the shaved flake-like product has an unnatural texture. In addition, it is nutritionally deficient in protein. Consequently, it is considered inadequate as a dried fish substitute. An object of the present invention is to provide a dried fish substitute containing plant protein as a main raw material. Another object of the present invention is to provide a dried fish substitute having an appearance characteristic of dried fish when shaved into flakes. Still another object of the present invention is to provide a dried fish substitute having a texture characteristic of dried fish when shaved into flakes.

### Solution to Problem

As a result of intensive studies conducted to solve the above-described issues, the present inventors have found that a dried fish substitute can be obtained by drying a water-containing molded product composed of a hydrated plant protein having a dense, unpuffed structure, and have completed the present invention.

That is, the present invention relates to:
(1) a method for producing a plant protein-containing dried fish substitute, the method including:
   (a) preparing a water-containing molded product, the water-containing molded product containing 10 mass% or more of plant protein based on 100 mass% of the water-containing molded product, having a moisture content of from 40 to 80 mass%, and having a dense structure; and
   (b) drying the water-containing molded product to obtain a dried solid product;
(2) the production method according to (1) described above, wherein the drying in (b) is carried out until the moisture content of the dried solid product reaches 30 mass% or less;
(3) the production method according to (1) described above, further including:
   (c) adding a material that imparts a dried fish-like taste or flavor to the water-containing molded product or the dried solid product;
(4) the production method according to (2) described above, further including:
   (c) adding a material that imparts a dried fish-like taste or flavor to the water-containing molded product or the dried solid product;
(5) the production method according to (1) described above, further including:
   (d) slicing the dried solid product into thin flakes;
(6) the production method according to (2) described above, further including:
   (d) slicing the dried solid product into thin flakes;
(7) the production method according to (3) described above, further including:
   (d) slicing the dried solid product into thin flakes;
(8) the production method according to (4) described above, further including:
   (d) slicing the dried solid product into thin flakes;
(9) a plant protein-containing dried fish substitute,
   wherein
   (A) the plant protein-containing dried fish substitute is a molded product containing 15 mass% or more of plant protein on a solids basis;
   (B) the molded product has a dense structure;
   (C) the plant protein-containing dried fish substitute has a moisture content of 30 mass% or less; and
   (D) the plant protein-containing dried fish substitute is imparted with a dried fish-like taste or flavor; and
(10) the plant protein-containing dried fish substitute according to (9) described above, wherein
   (E) the plant protein-containing dried fish substitute is sliced into thin flakes or is ground.

### Advantageous Effects of Invention

The present invention provides a dried fish substitute containing plant protein as a main raw material. The present invention also provides a dried fish substitute having an appearance characteristic of dried fish when shaved into flakes. The present invention also provides a dried fish substitute having a texture characteristic of dried fish when shaved into flakes.

### Brief Description of Drawings

FIG. 1 is a view presenting the water-containing molded product produced in Production Example 1.
FIG. 2 is a view presenting the dried fish substitute produced in Production Example 2.
FIG. 3 is a view presenting the shaved dried fish flake substitute produced in Production Example 3.
FIG. 4 is a view presenting the shaved dried fish flake substitutes produced in Production Example 4.
FIG. 5 is a view presenting the state before and after cutting of the dried fish substitute produced in Production Example 5 from each puffed granular soybean protein product. All of them are powdered and therefore have limited applications as a shaved dried fish flake substitute.

### Description of Embodiments

In one aspect, the present invention provides a method for producing a plant protein-containing dried fish substitute, the method including: preparing a water-containing molded product containing plant protein as a main raw material and having a dense structure; and drying the water-containing molded product to obtain a dried solid product.

Examples of the plant protein that serves as a raw material for the water-containing molded product in the present aspect include proteins derived from legumes, such as soybean, pea, mung bean, lupin bean, chickpea, kidney bean, lentil bean, and cowpea; seeds, such as sesame, canola seed, coconut seed, and almond seed; grains, such as corn, buckwheat, wheat, and rice; vegetables; and fruits. These plant proteins may be used alone, or two or more thereof may be used in combination. In a more specific embodiment, the plant protein is derived from legumes or grains. In a still more specific embodiment, the plant protein is derived from soybean or wheat. For example, a protein derived from soybean is prepared by further concentrating and processing a protein from a soybean raw material such as defatted soybean or whole soybean, and in general, examples thereof conceptually include soybean protein isolates, soybean protein concentrates, soybean milk powder, and various processed products thereof.

The water-containing molded product in the present aspect contains 10 mass% or more, for example, from 10 to 60 mass%, from 12 to 50 mass%, from 15 to 40 mass%, from 17 to 35 mass%, from 22 to 30 mass%, or from 24 to 28 mass% of the plant protein based on 100 mass% of the water-containing molded product. In an embodiment, the water-containing molded product contains 15 mass% or more, for example, from 20 to 100 mass%, for example, from 30 to 100 mass%, from 35 to 95 mass%, from 40 to 95 mass%, from 50 to 95 mass%, from 60 to 95 mass%, from 70 to 95 mass%, from 75 to 90 mass%, from 80 to 90 mass%, or from 84 to 88 mass% of the plant protein on a solids basis. The protein content can be measured by the Kjeldahl method as an official method.

The water-containing molded product in the present aspect contains from 40 to 80 mass%, for example, from 50 to 80 mass%, from 55 to 80 mass%, from 60 to 75 mass%, from 65 to 75 mass%, or from 68 to 72 mass% of water based on 100 mass% of the water-containing molded product.

As used herein, the term "having a dense structure" means a structure that is not porous like a puffed tissue. More specifically, it refers to a structure in which solids content such as protein exist without any gaps. Specific examples of tissues having a dense structure include animal tissues such as raw meat and raw fish. As used herein, the term "puffed tissue" refers to a porous structure, and specific examples thereof include puffed snacks and sponge-like structures.

In the present aspect, the water-containing molded product containing plant protein as a main raw material and having a dense structure can be obtained by heating a dough prepared by mixing the plant protein with water and then cooling the resulting solid. Examples of the heating temperature include from 70°C to 200°C, for example, from 100°C to 180°C, from 120°C to 160°C, from 70°C to 99°C, and from 75°C to 95°C. Examples of the cooling temperature include from -20 to 60°C, for example, from -10°C to 50°C, from 0°C to 40°C, and from 10°C to 30°C. More specifically, the water-containing molded product can be obtained by processing a raw material containing a protein and water using an extruder equipped with a cooling die at the outlet, which is one type of extrusion molding machine. Alternatively, the water-containing molded product can be produced using an extrusion molding machine such as PH-100 Power Heater (SOURCE TECHNOLOGY). The water-containing molded product can also be obtained by filling a casing tube with a raw material containing a plant protein, and heating and cooling the raw material. More specifically, a textured protein material disclosed in WO 2022/114013 may be used as the water-containing molded product. In one embodiment, the water-containing molded product is a water-containing textured product. The water-containing textured product can be obtained, for example, by using the above-mentioned extruder.

The resulting water-containing molded product is dried to form a dried solid product. The drying method is not particularly limited, and examples thereof include ventilation drying, hot air drying, sun drying, vacuum drying, freeze drying, smoking, and roasting and drying. In one embodiment, the method of smoking is not particularly limited, and any known method can be used as appropriate. Examples of such methods include a generator system in which smoke generated by a smoke generator is introduced into a smoking chamber to perform smoking treatment, and a direct-fire system. Examples of the drying temperature include from 40°C to 100°C, and from 60°C to 90°C. The drying time is, for example, from 1 hour to 2 weeks, from 12 hours to 1 week, from 24 hours to 5 days, or from 2 days to 3 days. Drying may be performed alone, may be performed multiple times or in combination with a plurality of types, or a plurality of types of drying may be simultaneously performed. Furthermore, different drying methods may each be carried out a plurality of times.

In a preferred embodiment, drying is performed by roasting and drying. As the roasting and drying method, methods commonly used in the production of katsuobushi may be employed. For example, the tebiyama-style roasting and drying method, the takinaya-style roasting and drying method, and the Yaizu-style roasting and drying method can be used alone or in combination. The conditions of the roasting and drying can be appropriately adjusted by those skilled in the art. Specifically, for example, water-containing molded products are arranged in a seiro (steamer), subjected to primary roasting and drying for 12 to 24 hours in a Yaizu-style dryer, and then transferred to a takinaya (smoking barn), where roasting and drying are carried out for 3 to 5 days while checking the drying condition.

In one embodiment, the moisture content of the dried solid product after drying is 30 mass% or less, 25 mass% or less, and for example, from 3 to 30 mass%, from 5 to 25 mass%, from 10 to 25 mass%, or from 15 to 25 mass%.

In one embodiment, the dried solid product obtained after drying can be used directly as a dried fish substitute. In another embodiment, the dried solid product can be used as a dried fish substitute by grinding off the tar substances adhering to its surface with a grinder or the like.

In one embodiment, mold inoculation may be performed on the above-mentioned dried fish substitute. The method of mold inoculation can be any method commonly used in the production of katsuobushi. Specifically, for example, the method described in JP 2022-160846 A can be used.

In one embodiment, the method of the present aspect further includes adding a seasoning material to the water-containing molded product or the dried solid product. The seasoning material is not particularly limited as long as it is capable of imparting a taste to the dried fish substitute. Examples thereof include seasonings such as salt, sugars, soy sauce, miso, and vinegar, as well as spices, vegetables, fruits, meat, fish and shellfish, milk, coffee, cocoa, and tea. Extracts may also be used, and materials in powder, liquid, puree, or similar forms can be used. In a more specific embodiment, the seasoning material imparts a dried fish-like taste or flavor. Examples of dried fish flakes include katsuobushi (dried bonito flakes), sababushi (dried mackerel flakes), magurobushi (dried tuna flakes), and urumebushi (dried round herring flakes). Typically, the seasoning material imparts a katsuobushi-like taste or flavor.

In one embodiment, the method of the present aspect may or may not include adding other raw materials to the water-containing molded product or the dried solid product, as long as the function thereof is not impaired. Examples of other raw materials include acidulants, sweeteners, spices, colorants, flavoring agents, salts, saccharides, antioxidants, vitamins, stabilizers, thickeners, carriers, fillers, lubricants, surfactants, propellants, preservatives, chelating agents, and pH adjusters.

The timing of adding the seasoning material or other raw materials is not particularly limited, and addition may be performed during mixing of the raw materials, after heating and before cooling, after cooling and before drying, during drying, or after drying. The method of addition is not particularly limited, and examples thereof include adding the material directly during mixing, preparing a solution and spraying it, and preparing a solution and injecting it.

In one embodiment, the method of the present aspect further includes slicing the dried fish substitute obtained above into thin flakes. The device used for slicing is not particularly limited, but, for example, a slicing machine or the like typically used in the production of shaved flakes can be used. In one embodiment, the thin flakes have a thickness of from 10 µm to 2 mm, for example, from 20 µm to 1 mm, from 30 µm to 500 µm, from 40 µm to 200 µm, or from 50 µm to 100 µm. In one embodiment, the thin flakes have a width of 3 mm or more, for example, from 3 mm to 5 cm, from 5 mm to 3 cm, or from 1 cm to 2 cm. In one embodiment, the method of the present aspect further includes grinding the dried fish substitute obtained above into powder.

In one embodiment, the resulting dried fish substitute may be eaten as is as a food or may be added to various foods for use.

In one aspect, the present invention provides a plant protein-containing dried fish substitute. Typically, the plant protein-containing dried fish substitute according to the present aspect can be produced by the method of the foregoing aspect. Accordingly, all the items defined in the aspects of the foregoing method are applicable to the present aspect.

In one embodiment, the dried fish substitute of the present aspect is a molded product containing 15% or more, for example, from 20 to 100 mass%, for example, from 30 to 100 mass%, from 35 to 95 mass%, from 40 to 95 mass%, from 50 to 95 mass%, from 60 to 95 mass%, from 70 to 95 mass%, from 75 to 90 mass%, from 80 to 90 mass%, or from 84 to 88 mass% of plant protein on a solids basis based on 100% of the molded product.

In one embodiment, the dried fish substitute of the present aspect is a molded product having a dense tissue structure.

In one embodiment, the moisture content in the dried fish substitute of the present aspect is 30 mass% or less, 25 mass% or less, and for example, from 3 to 30 mass%, from 5 to 25 mass%, from 10 to 25 mass%, or from 15 to 25 mass%.

In one embodiment, the dried fish substitute of the present aspect is provided with a dried fish-like taste or flavor. Examples of dried fish flakes include katsuobushi (dried bonito flakes), sababushi (dried mackerel flakes), magurobushi (dried tuna flakes), and urumebushi (dried round herring flakes). Typically, the food in the present aspect is provided with a katsuobushi-like taste or flavor. In another embodiment, the dried fish substitute of the present aspect may be flavored with seasonings such as common salt, sugars, soy sauce, miso, and vinegar, as well as spices, vegetables, fruits, meat, fish and shellfish, milk, coffee, cocoa, and tea.

In one embodiment, the dried fish substitute of the present aspect is a shaved dried fish flake substitute. In this embodiment, the shaved dried fish flake substitute is in the form of thin flakes or powder. Specific examples of the thickness and width of the thin flakes are as described above.

The shaved dried fish flake substitute of the present embodiment has a mouthfeel equivalent to that of commercially available katsuobushi (dried bonito flakes) or other dried fish flakes when eaten. Furthermore, when used as a topping for foods such as okonomiyaki (Japanese-style unsweetened pancake with various ingredients), the shaved dried fish flake substitute can exhibit the so-called "dance" motion, just like commercially available shaved dried fish flakes.

The dried fish substitute of the present aspect may be sprinkled directly onto foods such as rice, noodles, salad, tofu, meat, boiled dishes, grilled fish, takoyaki (Japanese-style grilled dumplings with bits of octopus), and okonomiyaki. It may also be used as an ingredient in processed rice products such as rice balls, or incorporated into toppings for the above-described foods.

### Examples

Hereinafter, embodiments of the present invention will be described in more detail with reference to the Examples. Unless otherwise specified, the "%" and the like in the Examples are on a mass basis.

### Production Example 1: Production of Water-Containing Molded Product

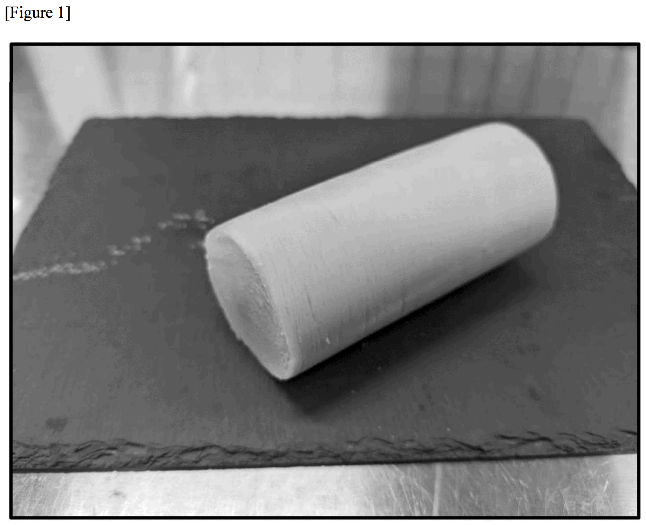

Raw materials were mixed according to the formulation presented in Table 1 below, and a water-containing molded product as a textured product was prepared using an extruder (KEI-45-25, available from Kowa Kogyo Co., Ltd.). The extruder was operated at a screw speed of 200 rpm and a dough temperature of approximately 140°C. After discharge, the dough was cooled and solidified using a cooling die. The resulting water-containing molded product is presented in FIG. 1. The resulting water-containing molded product had a moisture content of 69.5% (solids content: 30.5%), a protein content of 26.2% (86.0% in solids content), a lipid content of 1.0% (3.3% in solids content), a carbohydrate content of 2.4% (7.9% in solids content), and an ash content of 0.9% (2.8% in solids content). The resulting water-containing molded product was stored frozen.

**[Table 1]**

| Raw material | Formulation (%) |
|---|---|
| Powdered soybean protein (FUJIPRO FM, Fuji Oil Co., Ltd.)¹ | 16.0% |
| Powdered wheat protein (A-glu WP, Glico Nutrition Co., Ltd.)² | 15.8% |
| Starch (Corn Starch Y, Sanwa Shoji Co., Ltd.) | 0.3% |
| Seasoning (Super 04, Fuji Foods Corporation) | 0.02% |
| Water | 67.9% |
| Total | 100.0% |

| | |
|---|---|
| 1: (Protein content 86.0%, moisture content 5.0%) 2: (Protein content 78.9%, moisture content 4.8%) | |

### Production Example 2: Production of Dried Fish Substitute

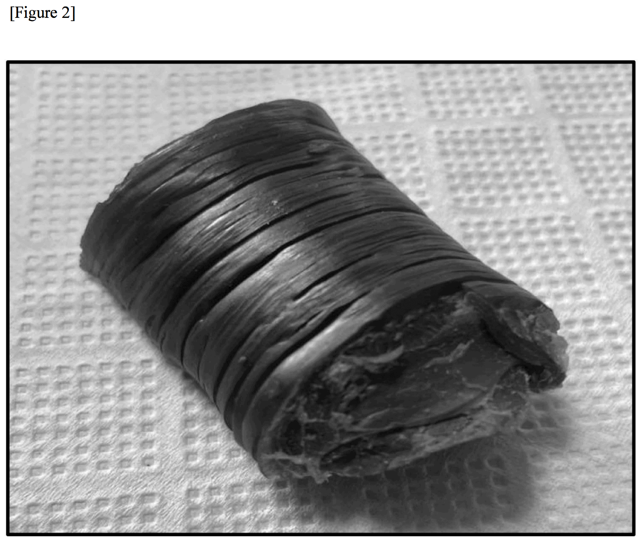

After thawing the water-containing molded product obtained above, it was arranged in a seiro (steamer) and subjected to primary roasting and drying for 12 hours at a temperature of 80 to 100°C using a Yaizu-style dryer. Next, the molded product after primary roasting and drying was transferred to a takinaya (smoking barn), where secondary roasting and drying was carried out for approximately 4 days at 70 to 90°C while checking the drying condition and appropriately adjusting the time. The moisture content of the final product was adjusted to about from 20 to 30% to obtain a dried solid product as a dried fish substitute. The dried solid product is presented in FIG. 2.

### Production Example 3: Production of shaved dried fish flake substitute

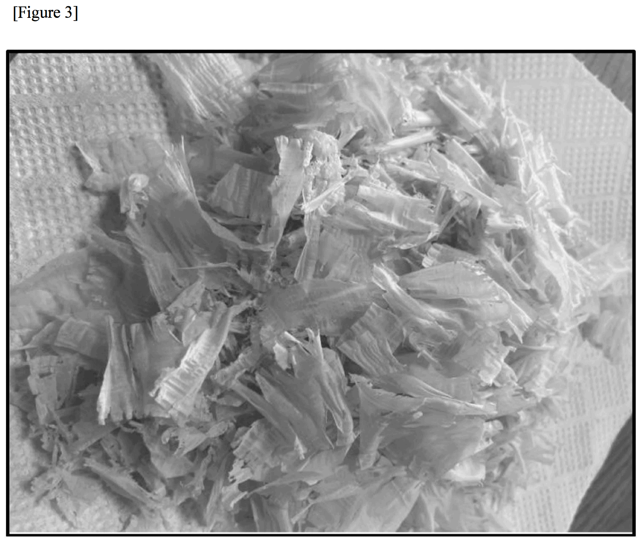

The dried solid product obtained above was cut to obtain a shaved dried fish flake substitute 1. The shaved dried fish flake substitute 1 is presented in FIG. 3.

### Evaluation of shaved dried fish flake substitute

The shaved dried fish flake substitute 1 obtained above was compared with commercially available katsuobushi, and the differences were confirmed in texture, shape, and overall evaluation. The sensory evaluation was conducted by five well-trained panelists, and scores were assigned by consensus. The scores are as follows. Texture was evaluated based on mouthfeel and chewing sensation, while shape was evaluated based on whether the product could be cut into large flower-like pieces. Commercially available katsuobushi was assigned a score of 5 for all evaluations.
1: Significantly different texture and shape from katsuobushi
2: Different texture and shape from katsuobushi
3: Slightly different texture and shape from katsuobushi
4: Almost no difference in texture and shape from katsuobushi
5: No difference in texture and shape from katsuobushi

The results are presented in Table 2.

**[Table 2]**

| | Commercially available katsuobushi | Shaved dried fish flake substitute 1 |
|---|---|---|
| Texture evaluation | 5 | 4 |
| Shape evaluation | 5 | 5 |
| Overall evaluation | 5 | 5 |

As described above, a shaved dried fish flake substitute comparable to commercially available katsuobushi was obtained.

### Production Example 4: Study Using Soybean Protein Gel

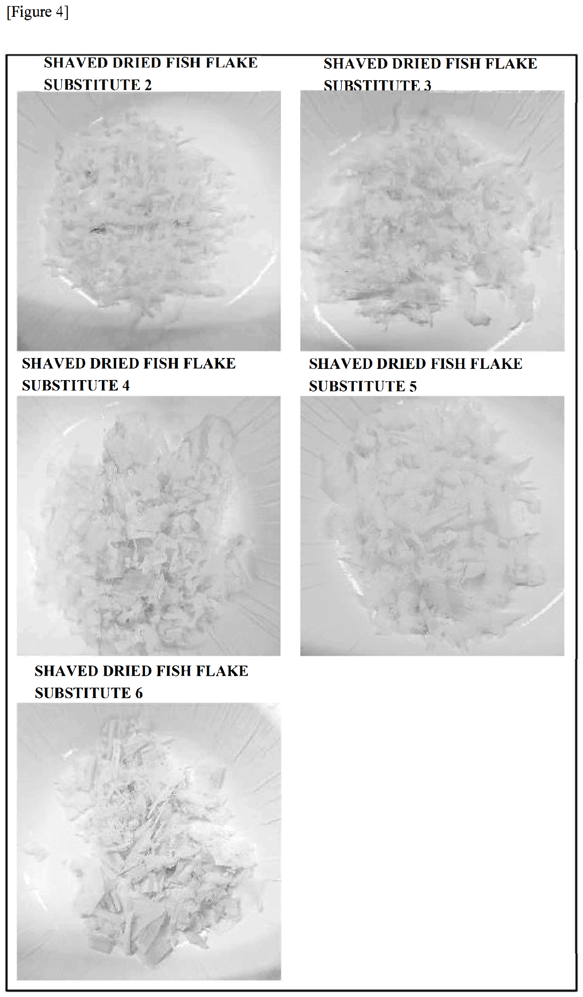

According to the formulation presented in Table 3, the raw materials were mixed using a Robot Coupe (FMI) to prepare a kneaded dough, and the dough was subjected to vacuum deaeration using a vacuum packaging machine (WEBOMATIC). Subsequently, the dough was cased, heated at 80°C for 45 minutes in a water bath (THOMAS), and then frozen. The resulting water-containing molded product was smoke-dried and cut in the same manner as in Production Examples 2 and 3 to obtain shaved dried fish flake substitutes 2 to 6. Shaved dried fish flake substitutes 2 to 6 are presented in FIG. 4.

**[Table 3]**

| Designation No. | Shaved dried fish flake substitute 2 | Shaved dried fish flake substitute 3 | Shaved dried fish flake substitute 4 | Shaved dried fish flake substitute 5 | Shaved dried fish flake substitute 6 |
|---|---|---|---|---|---|
| Powdered soybean protein¹ | 18.2% | 19.6% | | 10.9% | 14.6% |
| Powdered soybean protein² | | | 25.0% | | |
| Powdered wheat protein³ | | | | 10.9% | |
| Starch⁴ | | | | | 7.3% |
| Corn starch⁵ | | | | 0.2% | |
| Vegetable Oil⁶ | | | | | 7.3% |
| Sugar | | | | | 3.7% |
| Common salt | | | | | 1.0% |
| Seasoning⁷ | | | | | 0.3% |
| Water added | 81.8% | 80.4% | 75.0% | 78.0% | 65.8% |
| Total | 100.0% | 100.0% | 100.0% | 100.0% | 100.0% |
| Solids content | 17.3% | 18.6% | 23.6% | 20.9% | 32.9% |
| Protein | 15.7% | 16.9% | 21.6% | 18.0% | 12.7% |
| Protein (% in solids content) | 90.5% | 90.5% | 91.3% | 86.0% | 38.7% |

| | | | | | |
|---|---|---|---|---|---|
| 1: FUJIPRO FM, Fuji Oil Co., Ltd. (protein content: 86.0%, moisture content: 5.0%) 2: FUJIPRO AL, Fuji Oil Co., Ltd. (protein content: 86.3%, moisture content: 5.5%) 3: A-glu WP, Glico Nutrition Co., Ltd. (protein content 78.9%, moisture content 4.8%) 4: RK08, Glico Nutrition Co., Ltd. 5: Corn Starch Y, Sanwa Shoji Co., Ltd. 6: Palm Ace, Fuji Oil Co., Ltd. 7: Super 04, Fuji Foods Corporation | | | | | |

The resulting shaved dried fish flake substitutes 2 to 6 were evaluated in the same manner as in the evaluation of the shaved dried fish flake substitute described above. The results are presented in Table 4.

**[Table 4]**

| | Katsuobushi | Shaved dried fish flake substitute 2 | Shaved dried fish flake substitute 3 | Shaved dried fish flake substitute 4 | Shaved dried fish flake substitute 5 | Shaved dried fish flake substitute 6 |
|---|---|---|---|---|---|---|
| Texture evaluation | 5 | 1 | 1 | 2 | 2 | 3 |
| Shape evaluation | 5 | 1 | 2 | 4 | 4 | 4 |
| Overall evaluation | 5 | 1 | 1 | 3 | 3 | 4 |

The shaved dried fish flake substitutes 2 and 3 had a hard and crispy texture and were unsuitable. In addition, their shape did not form the characteristic "flower" shape but shrank, rendering them unsuitable. The shaved dried fish flake substitutes 4 to 6 readily dissolved in the mouth and, although they differed somewhat from typical katsuobushi, which tends to remain in the mouth, they were within an acceptable range for use as shaved dried fish flake substitutes. Among these, the shaved dried fish flake substitute 6 had the mouthfeel closest to that of katsuobushi. In addition, although its shape tended to be slightly smaller, it was still within the acceptable range. Thus, it was found that preferable results were obtained by using a water-containing molded product having a moisture content of 80% or less. However, all of the shaved dried fish flake substitutes 2 to 6 were inferior to the shaved dried fish flake substitute 1, which was produced as a textured product. It was also found that preferable results were obtained by texturizing the plant protein.

### Production Example 5: Investigation using Puffed Granular Soybean Protein Product

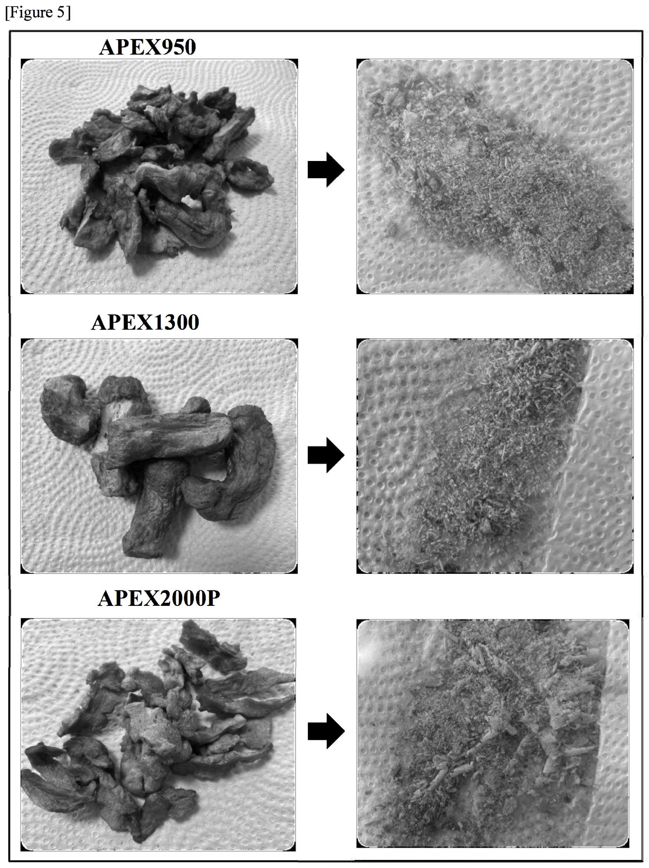

Water was added to the puffed granular soybean protein products "APEX 950", "APEX 1300", and "APEX 2000SP" (all available from Fuji Oil Co., Ltd.). They were then subjected to primary roasting and drying in a Yaizu-style dryer and secondary roasting and drying in a takinaya (smoking barn) in the same manner as in Production Examples 2 and 3. The moisture content of the final products was adjusted to approximately 10%, after which they were cut. The resulting dried fish substitute is presented in FIG. 5. Upon cutting, all of the dried fish substitutes became powdered, and their use as shaved dried fish flake substitutes was limited.

### Industrial Applicability

The present invention provides a dried fish substitute mainly composed of plant protein. The present invention can be applied to the food field and the like.

## Claims

1. A method for producing a plant protein-containing dried fish substitute, the method comprising:
(a) preparing a water-containing molded product, the water-containing molded product comprising 10 mass% or more of plant protein based on 100 mass% of the water-containing molded product, having a moisture content of from 40 to 80 mass%, and having a dense structure; and
(b) drying the water-containing molded product to obtain a dried solid product.

2. The production method according to claim 1, wherein the drying in (b) is carried out until the moisture content of the dried solid product reaches 30 mass% or less.

3. The production method according to claim 1, further comprising:
(c) adding a material that imparts a dried fish-like taste or flavor to the water-containing molded product or the dried solid product.

4. The production method according to claim 2, further comprising:
(c) adding a material that imparts a dried fish-like taste or flavor to the water-containing molded product or the dried solid product.

5. The production method according to claim 1, further comprising:
(d) slicing the dried solid product into thin flakes.

6. The production method according to claim 2, further comprising:
(d) slicing the dried solid product into thin flakes.

7. The production method according to claim 3, further comprising:
(d) slicing the dried solid product into thin flakes.

8. The production method according to claim 4, further comprising:
(d) slicing the dried solid product into thin flakes.

9. A plant protein-containing dried fish substitute, wherein
(A) the plant protein-containing dried fish substitute is a molded product containing 15 mass% or more of plant protein on a solids basis;
(B) the molded product has a dense structure;
(C) the plant protein-containing dried fish substitute has a moisture content of 30 mass% or less; and
(D) the plant protein-containing dried fish substitute is imparted with a dried fish-like taste or flavor.

10. The plant protein-containing dried fish substitute according to claim 9, wherein
(E) the plant protein-containing dried fish substitute is sliced into thin flakes or is ground.
